# EUROPÄISCHE PATENTANMELDUNG

(11) **EP 2 481 934 A1**
(43) Veröffentlichungstag der Anmeldung: **01.08.2012**
(21) Anmeldenummer: 12002653.9
(22) Anmeldetag: 04.11.2008
(51) Int. Cl.: F15B 13/02, B62D 5/07, G05D 7/06, G05D 11/13, F16K 31/06

(54) **Ventilvorrichtung**

(30) Priorität: 24.12.2007 DE 102007062649
(62) Teilanmeldung aus: 08863728.5
(71) Anmelder: Hydac Electronic GmbH, 66128 Saarbrücken (DE)
(72) Erfinder: Herold, Frank, 66129 Saarbrücken (DE); Remus, Kai, 66564 Ottweiler (DE); Fuchshumer, Franz, 66583 Spiesen-Elversberg (DE)
(74) Vertreter: Bartels & Partner

(57) **Zusammenfassung**

Die Erfindung betrifft eine Ventilvorrichtung für einen hydraulischen Kreis (10), die den zulaufenden Volumenstrom in mindestens zwei vorausbestimmte Teilströme zur Versorgung hydraulischer Verbraucher (V₁, V₂) des Kreises (10) teilt, die mindestens eine Druckwaage (16) aufweist sowie mindestens eine Blende. Dadurch, dass die Blende als variable Blende (32) ausgestaltet ist, die mittels eines Proportional-Magneten (34) derart ansteuerbar ist, dass deren Öffnungsfläche sich verändert, ist eine Art Stromregler realisiert, der den geregelten Volumenstrom umschalten und/oder definiert proportional einstellen kann. Parallel zu der variablen Blende (32) ist eine weitere Blende (36) mit vorzugsweise konstanter Öffnungsfläche geschaltet.

## Beschreibung

Die Erfindung betrifft eine Ventilvorrichtung für einen hydraulischen Kreis, die den zulaufenden Volumenstrom in mindestens zwei vorausbestimmte Teilströme zur Versorgung hydraulischer Verbraucher des Kreises teilt, die mindestens eine Druckwaage aufweist sowie mindestens eine Blende, wobei die Blende als variable Blende ausgestaltet ist, die mittels eines Proportional-Magneten derart ansteuerbar ist, dass deren Öffnungsfläche sich verändert.

Dahingehende Ventilvorrichtungen werden fachsprachlich auch als Stromregler oder als Stromregelventil bezeichnet und erlauben den zulaufenden Volumenstrom nach dem Drosselprinzip in einen geregelten und einen ungeregelten Restvolumenstrom aufzuteilen. Letztendl ich handelt es sich um Drosselventile mit einstellbarer Blende (Drossel), bei denen durch eine Kombination mit jeweils einer Druckwaage der Durchfluß unabhängig von wechselnden Lastdrücken konstant bleibt. Dabei gibt die Druckwaage einen wechselnden Querschnitt frei, der umgekehrt proportional zum Lastdruck ist, so dass dadurch der Durchflußstrom unabhängig vom Lastdruck im wesentlichen konstant bleibt.

Eine dahingehende Ventilvorrichtung ist beispielhaft in der DE 10 2006 004 264 A1 aufgezeigt, die eine Stabilisierungseinrichtung für ein mehrachsiges Fahrzeug betrifft mit je einem für eine Vorder- und eine Hinterachse vorgesehenen hydraulischen Steuerkreis. Dadurch, dass bei der bekannten Lösung der zulaufende Volumenstrom mindestens einer der Achsen von einem Stromregelventil geregelt ist, und dass bei einem höheren Leistungsvermögen einer Versorgungseinheit der damit einhergehende Überschuß an Volumenstrom an mindestens eine der anderen Achsen, die ungeregelt ist, weitergebbar ist, ist im Überschußfall an Volumenstrom dieser an der mittels des Stromventils geregelten Achse konstant gehalten und ein Überschußanteil gelangt an die jeweilige ungeregelte Achse. Hierdurch ist unter anderem erreicht, dass die gewünschte Wankstabilisierung an der nicht geregelten Achse vom Ansteuerverhalten her höher dynamisch ausgelegt ist, was in der Fahrpraxis deutliche Vorteile mit sich bringt gegenüber ansonsten konventionellen Mengenaufteilungen mit definiert vorgegebenen prozentualen Volumenverhältnissen für die jeweiligen Teilstrommengen zur Versorgung der hydraulischen Verbraucher, in Form des Steuerkreises für die genannten Vorder- und Hinterachse.

Aus der US 5 782 260 geht eine Ventilanordnung zur Versorgung von zwei Verbrauchern aus einer Quelle hervor, bei der eine Druckwaage endseitig mit Steuerdrücken beaufschlagbar ist, die auf einer Nutzleitung vor und nach einer variablen Drossel abgegriffen werden.

Ausgehend von diesem Stand der Technik liegt der Erfindung die Aufgabe zugrunde, unabhängig davon, wie hoch der Leistungsbedarf für den jeweiligen Teilstrom des hydraulischen Kreises ist, denjenigen Verbraucher mit der notwendigen Fluidmenge zu versorgen, der den Leistungsbedarf für ein sicherheitsrelevantes System des hydraulischen Kreises zu gewährleisten hat. Eine dahingehende Aufgabe löst eine Ventilvorrichtung mit den Merkmalen des Patentanspruches 1 in seiner Gesamtheit.

Dadurch, dass die Blende als variable Blende ausgestattet ist, die mittels eines Proportional-Magneten derart ansteuerbar ist, dass deren Öffnungsfläche veränderbar ist, ist eine Art Stromregler realisiert, der den geregelten Volumenstrom umschalten und/oder definiert proportional einstellen kann. Die dahingehende Funktion wird insbesondere benötigt, wenn von nur einer Hydraulikpumpe als Druckversorgungsquelle mindestens zwei Hydrauliksysteme mit vom Leistungsbedarf her unterschiedlichen hydraulischen Verbrauchern betrieben werden und deren Leistungsbedarf zumindest teilweise sehr unterschiedlich sein kann, wobei gleichzeitig eines der beiden Systeme das sicherheitsrelevante System bildet, das unter allen Bedingungen zu versorgen ist.

Aufgrund der variablen Blende, die durch die Ansteuerung mit einem Proportional-Magneten realisiert ist, ergibt sich daraus folgend eine proportional veränderbare Öffnungsfläche, die so gestaltet ist, dass bei allen Ansteuerzuständen eine definierte Durchflußfläche geöffnet bleibt, die in jedem Fall den Leistungsbedarf für das sicherheitsrelevante System gewährleistet. Selbst im Fehlerfall, wenn also beispielsweise der Strom für den Proportional-Magneten als Ansteuereinrichtung ausfällt, wird ein maximal geregelter Volumenstrom dem sicherheitsrelevanten System zugeführt und dessen Funktion sichergestellt.

Parallel zu der variablen Blende ist eine weitere Blende mit vorzugsweise konstanter Öffnungsfläche geschaltet.

Die erfindungsgemäße Ventilvorrichtung, die insoweit in der Art eines variablen Stromregelventils ausgebildet ist, findet in besonders vorteilhafter Weise Anwendung bei Fahrzeugen jedweder Art (Personen-Kraftwagen, Omnibussen, Lastkraftwagen, straßengängige Arbeitsmaschinen etc.), wo eine vom Fahrzeugmotor angetriebene hydraulische Pumpe als Druckversorgungsquelle sowohl die servounterstützte Lenkung als auch die Wankstabilisierung für die Achsen des Fahrzeuges versorgt.

Für die damit einhergehenden Leistungsanforderungen an die einzelnen Systeme bedeutet dies aufgrund praktischer Gegebenheiten folgendes. Bei schneller Fahrt des Fahrzeuges ist von der Bedienerseite her nur wenig Lenkeinschlag (Geschwindigkeit) notwendig und es wird insoweit wenig Servounterstützung benötigt. Insoweit kann der Volumenstrom im Lenkkreis auf einen Minimalwert heruntergeregelt werden, wobei gleichzeitig größere Wankmomente auszuregeln sind. Andererseits ist beispielsweise beim Einparken ein großer Lenkeinschlag (Geschwindigkeit) mit entsprechend großer Servounterstützung notwendig und der Wankausgleich ist beim Einparken weniger bedeutsam. Für beide Systemanforderungen darf aber nie zu wenig Volumenstrom für die Lenkung vorliegen, da andernfalls die Servounterstützung für den Lenkeinschlag ausfällt, wobei moderne Fahrzeuge ohne eine dahingehende Servounterstützung kaum noch mit normalem Kraftaufwand zu beherrschen sind. Mit der erfindungsgemäßen Lösung ist für den dahingehenden Anwendungsfall immer sichergestellt, dass die Lenkung nicht zu wenig Volumenstrom, betreffend die angesprochene Servounterstützung, erhält.

Auch im Fehlerfall muß sichergestellt sein, dass bei einem minimal geregelten Volumenstrom die Servounterstützung der Lenkung zugute kommt. Ferner soll bei einem Stromausfall als weitere mögliche Fehlerquelle für den Proportional-Magneten dieser dann die größte Öffnungsfläche an der Blende einstellen und der Lenkung steht der größte geregelte Volumenstrom zur Verfügung.

Unabhängig von der beschriebenen Anwendung ist die erfindungsgemäße Ventilvorrichtung immer dort einsetzbar, wo unterschiedliche Teilströme eines hydraulischen Kreises einzustellen sind mit angeschlossenen hydraulischen Verbrauchern, die unterschiedliche Leistungsanforderungen haben und/oder die insbesondere aus Sicherheitsaspekten heraus vorher nicht zu versorgen sind.

Sofern im vorliegenden Anmeldetext von "Blenden" die Rede ist, soll diese Angabe auch den Einsatz von "Drosseln" mit beschreiben und insoweit mit abdecken. Dies gilt auch für den weiter fachsprachlich eingesetzten Begriff "Meßblende". Sofern also von einer "Blende", "variablen Blende", "freie Blendenquerschnitte" etc. die Rede ist, schließt dies regelmäßig die Angaben "Drossel", "variable Drossel", "freie Drossel-Querschnittsfläche" etc. mit ein.

Bei einer besonders bevorzugten Ausführungsform der erfindungsgemäßen Ventilvorrichtung sind zumindest die Druckwaage sowie die jeweils eingesetzten Blenden und der Proportional-Magnet Bestandteil eines gemeinsamen Ventilblockes, der insoweit als Modul-Baueinheit vor Ort auch an bereits bestehende Fahrzeugsysteme nachrüstbar ist.

Weitere vorteilhafte Ausgestaltungen der erfindungsgemäßen Ventilvorrichtung sind Gegenstand der weiteren Unteransprüche.

Im folgenden wird die erfindungsgemäße Ventilvorrichtung anhand von Ausführungsbeispielen nach der Zeichnung näher erläutert.

Dabei zeigen in prinzipieller und nicht maßstäblicher Darstellung die
- Fig.1: den grundsätzlichen Aufbau der Ventilvorrichtung anhand eines hydraulischen Schaltplans;
- Fig.2: in der Art einer Längsschnittdarstellung, jedoch ohne eingezeichnete Schraffur, den bei der Ventilvorrichtung eingesetzten Proportional-Magneten mit angeschlossenem Ventilgehäuse zur Realisierung einer variablen Blende und einer Konstantblende;
- Fig.3: die Ventilanordnung nach der Fig.2 mit nachgeschalteter Druckwaage nebst Dämpfungseinrichtung;
- Fig.4: eine der Fig.3 entsprechende Druckwaagendarstellung, jedoch ohne zusätzliche Schwingungsdämpfung;
- Fig.5: in perspektivischer Draufsicht die Ventilvorrichtung als Ganzes.

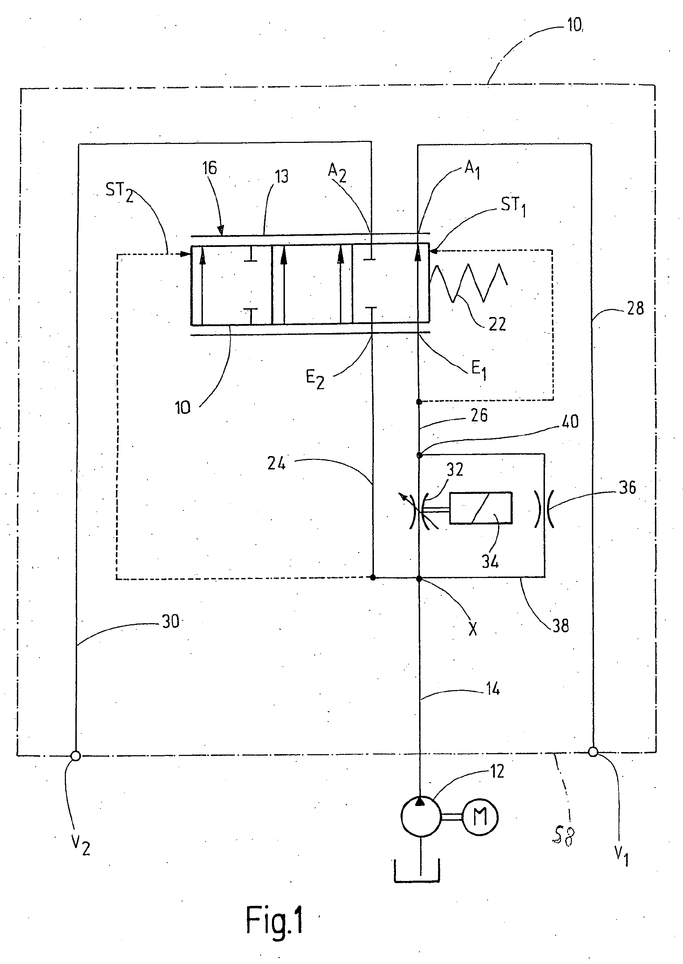

Die in der Fig.1 in der Art eines hydraulischen Schaltplanes gezeigte Ventilvorrichtung dient der Versorgung eines hydraulischen Kreises 10 mit Fluid. Der hydraulische Kreis 10 wird insoweit über eine Druckversorgungsquelle 12 mit Fluid versorgt. Die Druckversorgungsquelle 12 weist eine übliche Hydropumpe auf, die von einem Motor antreibbar ist, beispielsweise dem Verbrennungsmotor eines Fahrzeuges. Der über die Leitung 14 von der Druckversorgungsquelle 12 zulaufende Fluidvolumenstrom teilt sich an der Abzweigstelle X, wobei der eine Teilstrom zu einem nicht näher dargestellten hydraulischen Verbraucher V₁ führt und der weitere Teilstrom zu einem hydraulischen Verbraucher V₂. Im konkreten Ausführungsbeispiel soll der Verbraucher V₁ aus einer servounterstützten Lenkung gebildet sein und der Verbraucher V₂ bildet eine Wankstabilisierung für die Achsen des genannten Fahrzeugs (nicht dargestellt) aus.

Des weiteren weist die Ventilvorrichtung eine übliche Druckwaage 16 auf, die in der nicht regelnden Grundstellung gezeigt ist und im übrigen eine Art 4/3-Wege-Proportional-Ventillösung ausbildet. Der in einem Druckwaagengehäuse 18 geführte Druckwaagenkolben 20 ist an seinen gegenüberliegenden Seiten von zwei gegenläufig wirkenden Steuerdrücken ST₁ und ST₂ beaufschlagt und ferner stützt sich in Blickrichtung auf die Fig.1 gesehen der Druckwaagenkolben 20 mit seiner rechten Seite an einer Einstellfeder 22 in der Art einer Druckfeder ab. Der eine Steuerdruck ST₂ ist dabei an die Abzweigstelle X angeschlossen, die wiederum über die Leitung 24 fluidführend in Verbindung steht mit dem Fluideingang E₂ der Druckwaage 16. Der andere Steuerdruck ST₁ wird vor dem Eingang E₁ der Druckwaage 16 in der zuführenden Leitung 26 abgegriffen. Des weiteren führt diese Leitung 26 zu der Abzweigstelle X. Korrespondierend sind auf der gegenüberliegenden Seite die Fluidausgänge A₁, A₂ angeordnet, die über Leitungen 28, 30 an den ersten hydraulischen Verbraucher V₁ bzw. zweiten Verbraucher V₂ angeschlossen sind.

In die Leitung 26 ist, beginnend an der Abzweigstelle X, eine variable Blende 32 geschaltet, die mittels eines Proportional-Magneten 34 ansteuerbar ist, d.h. mittels des Proportional-Magneten 34 läßt sich die freie Öffnungsfläche der variablen Blende 32 vorgeben. Parallel zu der variablen Blende 32 ist eine weitere Blende 36 als sog. Konstantblende geschaltet, d.h. die freie Öffnungsfläche der weiteren Blende 36 ist konstant. Die genannte Parallelanordnung für die weitere Blende 36 ergibt sich daraus, dass diese in eine Leitung 38 geschaltet ist, die in Fluidrichtung gesehen vor der variablen Blende 32 in die Leitung 14 mündet und nach der variablen Blende 32 in die Leitung 26, und zwar an der Anschlußstelle 40. Ferner mündet gemäß der Darstellung nach der Fig.1 die Leitung 38 in die Abzweigstelle X der Leitung 14. Des weiteren ist für den Erhalt des Steuerdruckes ST₁ die Druckwaage 16 über eine gestrichelt dargestellte Steuerleitung insoweit in die Leitung 26 zwischen Anschlußstelle 40 und Fluideingang E₁ geschaltet, so dass insoweit als Steuerdruck ST₁ der bei E₁ herrschende Fluiddruck ansteht und als Steuerdruck ST₂ dient der Fluiddruck auf der Fluideingangsseite E₂ der Druckwaage 16. Auch die dahingehende Steuerleitung für den Steuerdruck ST₂ ist in der Fig.1 strichliniert dargestellt.

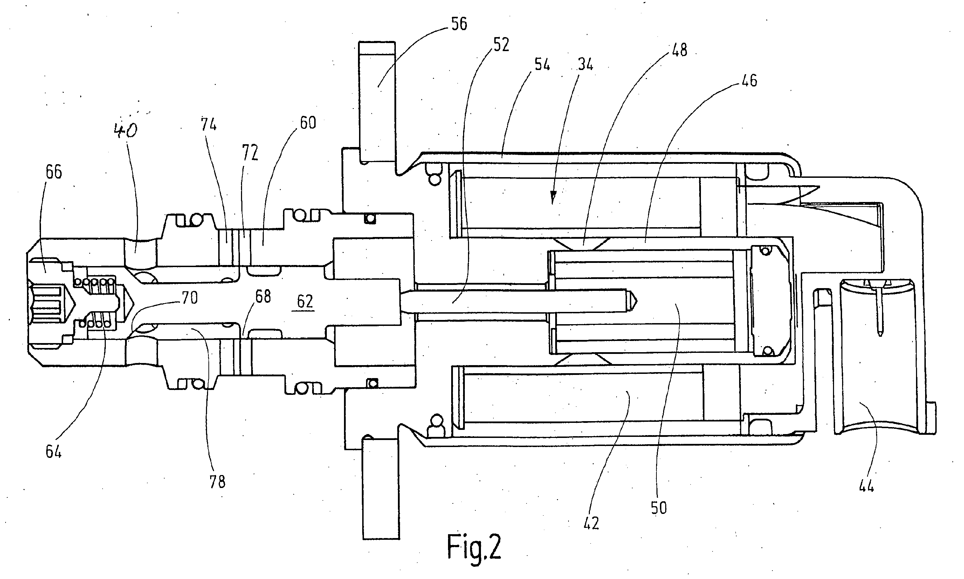

Zur Ansteuerung des Gesamtsystems ist die Spulenwicklung 42 des Proportional-Magneten 34 an eine nicht näher dargestellte Rechnereinheit über einen elektrischen Steckerkontakt 44 angeschlossen (vgl. Fig.2), die insoweit beispielsweise abhängig von der Fahrgeschwindigkeit des Fahrzeuges die Strom-Ansteuerwerte für den Proportional-Magneten 34 vorgibt. Insgesamt ist mit der Lösung nach der Fig.1 eine Ventilvorrichtung in der Art eines Stromreglers geschaffen, der den geregelten Teil-Volumenstrom zu dem zu regelnden Verbraucher definiert proportional einstellen kann. Die dahingehende Funktion wird benötigt, wenn ausgehend von der Druckversorgungsquelle 12 beispielsweise zwei Hydrauliksysteme mit den Verbrauchern V₁ (servounterstützte Lenkung) und dem Verbraucher V₂ (Wankstabilisierung) betrieben werden, deren Leistungsbedarf zum Teil deutlich unterschiedlich ist. Gleichzeitig ist eines der beiden Systeme, nämlich das servounterstützte Lenksystem, ein sicherheitsrelevantes Fahrzeugsystem und muß unter allen Bedingungen mit dem zu seiner sicheren Funktion notwendigen Volumenstrom versorgt werden. Die Ventildarstellung nach der Fig. 2 zeigt den bestromten und mithin geschalteten Zustand für die Ventilvorrichtung woraus sich ein minimaler Volumenstrom ergibt.

Für die Leistungsanforderung der beiden Systeme gilt dann im einzelnen das Folgende:
Bei schneller Fahrt des Fahrzeuges ist nur wenig Lenkeinschlag (Geschwindigkeit) notwendig und es wird insoweit wenig Servounterstützung benötigt. In diesem Fall kann der geregelte Volumenstrom im Lenkkreis für den Verbraucher V₁ auf einen minimalen Wert heruntergeregelt werden, was der insoweit geschwindigkeitsabhängig ansteuerbare Proportional-Magnet 34 veranlaßt. Im Gegenzug müssen größere Wankmomente ausgeregelt werden und der Verbraucher V₂ erhält einen größeren Rest-Volumenstrom vonseiten der Abzweigstelle X und der Druckwaage 16. Andererseits ist beispielsweise beim Einparken ein großer Lenkeinschlag (Geschwindigkeit) mit großer Servounterstützung notwendig, so dass der hydraulische Verbraucher V₁ einen großen Volumenteilstrom benötigt. Der Wankausgleich ist beim Einparken hingegen weniger relevant, so dass der insoweit benötigte Fluidvolumenstrom reduziert werden kann.

Für beide beschriebenen Zustände darf aber die Lenkung, also der hydraulische Verbraucher V₁, niemals zu wenig Volumenstrom erhalten, was mit der Ventilvorrichtung gemäß der Darstellung nach der Fig.1 erreicht ist. Im Fehlerfall, also beispielsweise bei Stromausfall, wird der Proportional-Magnet 34 nicht mehr bestromt und insoweit ist sichergestellt, dass die variable Blende 32 ihren größten Öffnungsquerschnitt einnimmt, also die größte Öffnungsfläche aufweist, und somit weiterhin der größte geregelte Volumenstrom an die servounterstütze Lenkung (Verbraucher V₁) gelangt.

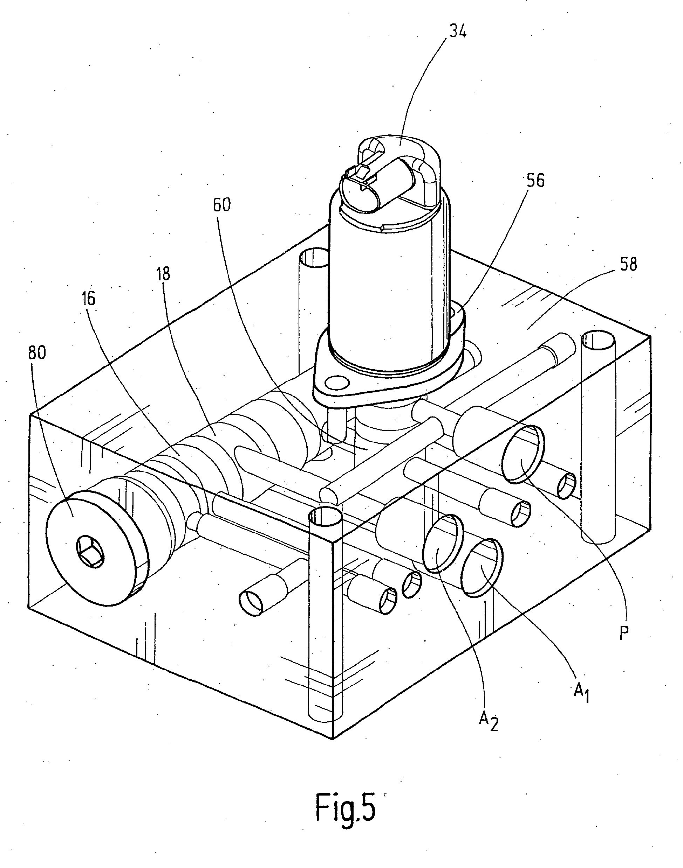

Im Folgenden wird nun bei der erfindungsgemäßen Ventilvorrichtung die Anordnung Proportional-Magnet 34 mit variabler Blende 32 und Konstantblende 36 näher erläutert. Wie bereits dargelegt, weist der Proportional-Magnet 34 eine Spulenwicklung 42 auf, die über einen elektrischen Steckerkontakt 44 von einer nicht näher dargestellten Rechnereinheit (Bordcomputer) ansteuerbar ist, die fahrzeugseitige Daten verarbeitet, wie beispielsweise Fahrzeuggeschwindigkeit, Lenkeinschlag etc.. In einer Polrohranordnung 46 mit magnetischer Trennung 48 ist längsverfahrbar ein Ankerkörper 50 mit stirnseitig eingesetzter Betätigungsstange 52 geführt. Der Proportional-Magnet 34 ist als Anbauteil ausgebildet und das Magnetgehäuse 54 läßt sich über ein Flanschteil 56 an Drittbauteilen festlegen, beispielsweise in Form eines Ventilblockes 58 nach der Fig.5. Über das elektrische Kontaktteil 44 läßt sich die Spulenwicklung 42 mittels der bereits genannten Rechnereinheit ansteuern, die wiederum in Abhängigkeit der Fahrzeuggeschwindigkeit Steuerimpulse an die Spulenwicklung 42 weiterleitet, die insoweit den Ankerkörper 50 mit Betätigungsstange 52 zustellt. Der Aufbau dahingehender Proportional-Magnete 34 ist an sich bekannt, so dass an dieser Stelle hierauf nicht mehr näher eingegangen wird.

An den Proportional-Magneten 34 schließt sich ein Ventilgehäuse 60 an, in dem ein Ventil- oder Steuerkolben 62 geführt ist. Der Steuerkolben 62 wird auf seiner in Blickrichtung auf die Fig.2 gesehen rechten Seite von der Betätigungsstange 52 angesteuert und stützt sich mit seinem anderen linken freien Ende an einer Stützfeder 64 in der Art einer Druckfeder ab, die über einen Abschlußstopfen 66 im Ventilgehäuse 60 gelagert ist und eine permanente rückstellende Druckkraft auf den Steuerkolben 62 ausübt. Des weiteren weist der Steuerkolben 62 eine ringförmige Verbreiterung 68 auf sowie an seiner linken freien Stirnseite eine konisch sich verbreiternde Steuerfläche 70.

Die dahingehende Fläche 68 dient dem Ansteuern von Durchlaßöffnungen 72,74. Die genannten Durchlaßöffnungen sind als Durchlaßbohrungen ausgebildet und durchgreifen in Reihen zueinander angeordnet und vorzugsweise diametral einander gegenüberliegend mehrfach das Ventilgehäuse 60. Ferner können die Durchlaßöffnungen 72,74 in jeder Querschnittsreihe betrachtet unterschiedliche Durchmesser aufweisen und/oder eine unterschiedliche Anzahl an Bohrungen. Insbesondere zeigt die Fig.2 eine erste Bohrungsreihe mit in Verfahrrichtung des Steuerkolbens 62 gesehen hintereinander angeordneten Durchlaßöffnungen 72,74, wobei die erste Reihe an Durchlaßöffnungen 72 in Verbindung mit der ringförmigen Verbreiterung 68 des Steuerkolbens 62 die Steuerung für den variablen Volumenstromanteil ausbildet und mithin das Blendenkonzept für die variable Blende 32 bildet, wohingegen die im Nebenschluß und in Parallelschaltung angeordnete Konstantblende 36 durch die Durchlaßöffnung 74 gebildet ist. Die variable Blende 32 ist mithin durch die Durchlaßöffnung 72 gebildet und die Konstantblende 36 durch die Durchlaßöffnung 74.

Je nachdem, wie die Stellung des Steuerkolbens 62 ist, regelt dieser insoweit dann die variable Blende 32 über die entsprechende Steuerkante zwischen Durchlaßöffnung 72 und zylindrischer Einschnürung 78 im Steuerkolben 62. Aus der Darstellung nach der Fig.2 wird auch deutlich, dass bei einem Stromausfall und bei nicht mehr bestromter Spulenwicklung 42 die Stützfeder 64 sich entspannt und in Blickrichtung auf die Fig.2 gesehen den Steuerkolben 62 nach rechts verschiebt, was zu einer vollen Öffnung der Durchlaßöffnungen 72,74 führt und der Fluiddurchtritt ist derart, dass über die Anschlussstelle 40 die geregelte Fluidversorgung sichergestellt ist für den Fluidteilkreis betreffend den Verbraucher V₁ in Form der servounterstützen Lenkung. Auf diese Art und Weise ist für die erfindungsgemäße Ventilvorrichtung eine Art Fail-Safe-Schaltung erreicht.

Mit der Ventillösung nach der Fig.2 ist eine variable Meßblende (Drossel) 32 realisiert, welche durch die Ansteuerung mit dem Proportional-Magneten 34 und darausfolgend einer proportional veränderlichen Öffnungsfläche, gebildet durch die Durchlaßöffnung 72, gekennzeichnet ist. Diese veränderbare Öffnungsfläche ist derart gestaltet, dass bei allen Ansteuerzuständen mittels des Proportional-Magneten 34 immer eine definierte Fläche geöffnet bleibt. Dabei würde es dem Grunde nach genügen, in einer Grundvariante nur eine Reihe an Durchlaßöffnungen 72 für den Fluiddurchtritt von außen nach innen hin vorzusehen, wobei im Sinne einer Hubbegrenzung des Steuerkolbens 62 sichergestellt werden muß, dass zumindest ein Teil der dahingehend wirksamen Lochdurchmesser dann frei bleibt.

Es hat sich jedoch in der Praxis gezeigt, dass eine Lösung mit nur einer Bohrungsreihe, welche nur teilweise verschlossen wird, nur schwierig eine genaue Einstellung des Volumenstromes in der bestromten Endlage des Magneten 34 zuläßt. Insbesondere dürften bei der Fertigung und der Montage keine Toleranzen auftreten. Demgegenüber läßt sich ein sicheres und robustes System mit einer Anordnung erreichen, bei der neben der proportional einstellbaren Blende (Drossel) 32 eine solche Blende (Drossel) 36 tritt, welche immer geöffnet ist. Die Kontantblende 36 ist zu der proportional einstellbaren Blende 32 parallel geschaltet, so dass sich aus der Summe der beiden Öffnungsquerschnitte oder Öffnungsflächen das Gesamt-Blendenverhältnis für das System an der Anschlußstelle 40 für die Druckwaage 16 ergibt.

Um auf der sicheren Seite zu liegen, ist der Steuerkolben 62 für die variable Blende 32 jedenfalls so dimensioniert, dass er ca. 0,1 mm vor der zuordenbaren Reihe an Durchlaßöffnungen 72 im unbestromten Zustand steht und im vollbestromten Zustand in Blickrichtung auf die Fig.2 gesehen nach links 0,1 mm nach der Reihe an Durchlaßöffnungen 72 steht. Durch diese konstruktive Auslegung, die nur beispielhaft ist, ist gesichert, dass unabhängig von den Fertigungstoleranzen die variable Blende 32 jedenfalls vollständig geöffnet oder geschlossen sein kann. Insoweit liegen definierte Bedingungen vor und die Endwerte werden sicher erreicht. Die permanent geöffnete Blende 36 kann im Ventilblock 58 realisiert sein (Fig. 1) oder gemäß der Darstellung nach der Fig.2 als zweite Bohrungsreihe 74, welche von dem Ventilkolben oder Steuerkolben 62, vorzugsweise nie ganz oder in Abhängigkeit des Einsatzzweckes auch teilweise überfahren werden kann.

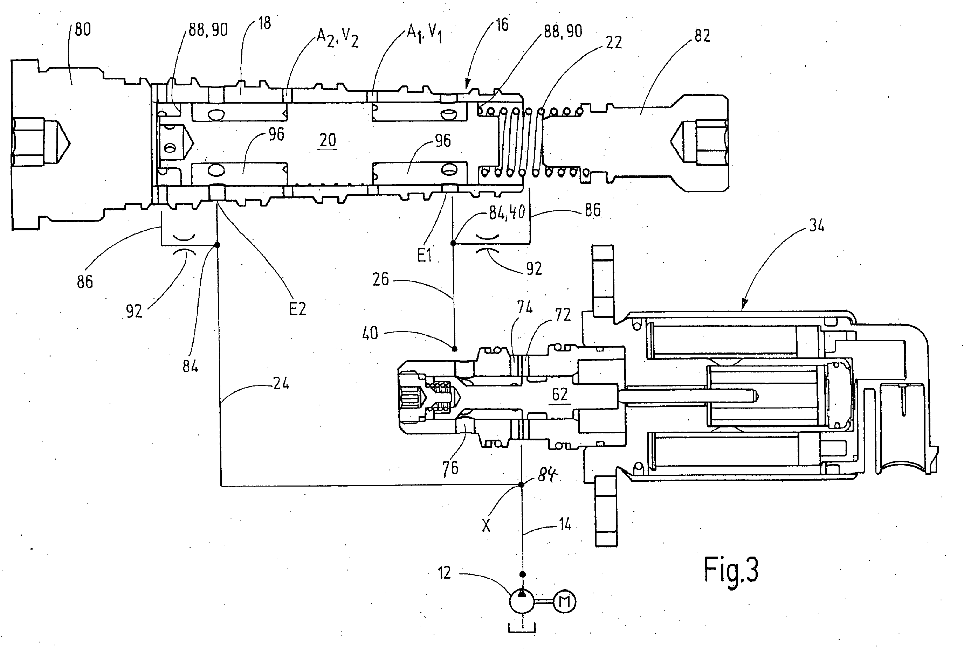

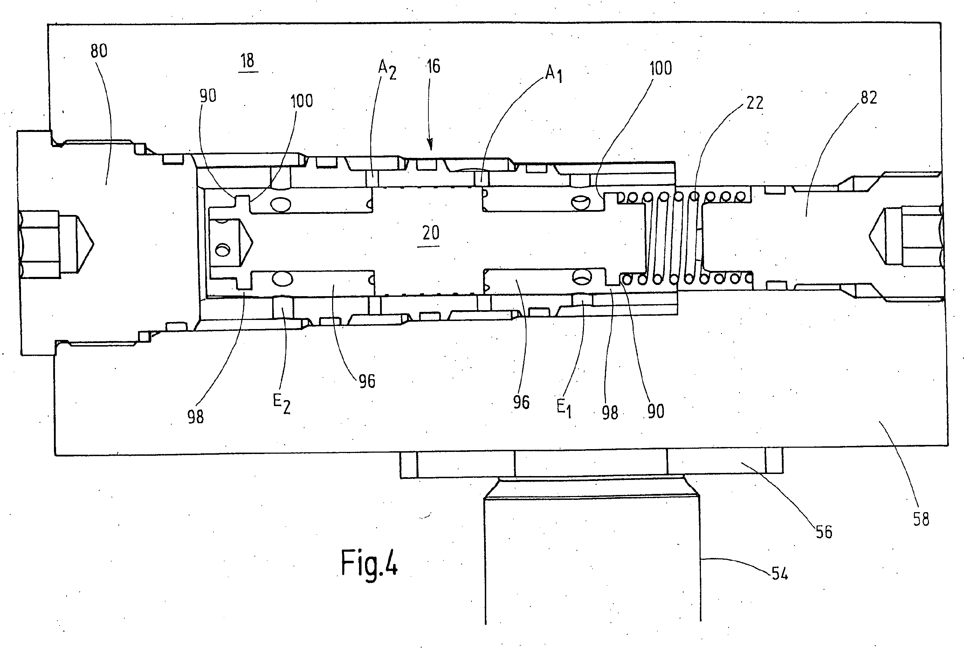

In jedem Fall arbeitet die veränderliche Blende 32 immer mit der in Fluidrichtung nachgeschalteten Druckwaage 16 zusammen, was im Einzelnen in der Fig.3 näher geschrieben ist. Die Druckwaage 16 ist in der Art einer Einschraubpatronenlösung ausgebildet und insoweit gemäß der Darstellung nach der Fig.4 in einen Ventilblock 58 einsetzbar (vgl. Ausführungsbeispiel nach der Fig.5). So ist in Blickrichtung auf die Fig.3 gesehen auf der linken Seite ein Einschraubteil 80 vorhanden und auf der gegenüberliegenden rechten Seite ein weiteres Einschraubteil 82, wobei das weitere Einschraubteil 82 im Gehäuse 18 der Druckwaage 16 auch dem Einstellen der Federvorspannung für die Einstellfeder 22 dient, da exakt auf ein kleines Δρ geregelt werden soll. In Übereinstimmung mit dem Grundschaltplan nach der Fig.1 sind an der Druckwaage die einzelnen Anschlüsse mit E₁, E₂, A₁ und A₂ bezeichnet. Ferner wird bei der Ausführungsform nach der Fig.3 an einer jeweils weiteren Abzweigstelle 84 innerhalb der Leitungen 24,26 im Nebenzweig 86 ein Teil des dahingehenden Teilvolumenstroms als Steuerstrom ST₁, ST₂ von der Eingangsseite E₁, E₂ der Druckwaage 16 auf eine zugeordnete Kolbenendseite 88 des Druckventilkolbens 20 geführt. Insoweit weist der Druckwaagenkolben 20 in jeder seiner Verfahrstellungen mittels am Druckwaagengehäuse 18 anliegender Kolbenringflächen 90 eine fluiddichte Trennung zwischen den Eingangsseiten E₁ und E₂ zu den Kolbenendseiten 88 auf. Ferner ist in den genannten Nebenzweig 86 jeweils eine gleiche Dämpfungsblende 92 geschaltet. Mit den dahingehenden Dämpfungsblenden 92 im Nebenschluß lassen sich unerwünschte Schwingungen beim Betrieb der Druckwaage 16 vermeiden. Die jeweiligen Dämpfungsblenden 92 lassen sich auch in Form von Dämpfungsbohrungen im Druckwaagengehäuse 18 realisieren. Auch wäre es möglich, nur eine der beiden Seiten der Druckwaage 16 mit einer Dämpfung zu versehen.

Gemäß der Darstellung nach der Fig.3 ist der Druckwaagenkolben 20 in seiner mittleren Betätigungsstellung gezeigt, bei der er teilweise die Fluidausgänge A₁, A₂ überdeckt, die zu den hydraulischen Verbrauchern V₁ bzw. V₂ führen. Die Fluideingänge E₁ und E₂ hingegen sind vom Kolben 20 freigelassen und über Radialaussparungen 96 ist eine permanente Fluidverbindung zwischen E₁, A₁ und E₂ mit A₂ gegeben, wobei die Fluidausgänge A₁, A₂ insoweit durch den Druckwaagenkolben 20 angedrosselt sind. Je nach Verfahrstellung des Druckwaagenkolbens 20 stellen sich insoweit sinngemäß die prinzipiellen Schaltmöglichkeiten für die Druckwaage 16 nach der Fig.1 ein. Da der dahingehende Druckwaagenaufbau an sich bekannt ist, wird insoweit an dieser Stelle hierauf nicht mehr näher eingegangen.

Die Ausführungsform nach der Fig.4 ist insoweit gegenüber der Ausführungsform nach der Fig.3 geändert, als die Dämpfungsblenden 92 entfallen sind. Auch weist der Druckwaagenkolben 20 bei der dahingehenden Ausführungsform in jeder seiner Verfahrstellungen vom Druckwaagengehäuse 18 beabstandete Kolbenringflächen 90 auf. Im übrigen entsprechen sich vom Flächenverhältnis her die einander gegenüberliegenden Kolbenringflächen 90 für die Ausführungsform nach den Fig.3 und 4, so dass insoweit für beide Ausführungsformen der Kolben 20 im wesentlichen symmetrisch ausgestaltet ist. Bei der geänderten Ausführungsform nach der Fig.4 gelangt das Fluid über die Eingänge E₁, E₂ sowie die Radialaussparungen 96 und den jeweiligen Ringspalt 98 auf die wirksame Kolbenringfläche 90.

Wie die Ventilblockgestaltung nach der Fig.5 zeigt, läßt sich die gesamte Ventilvorrichtung in einer Baueinheit zusammenfassen. Im Sinne einer kompakten Anordnung ist vorzugsweise vorgesehen, dass der Proportional-Magnet 34 auf der Oberseite des Ventilblockes 58 vorsteht und dort mittels des Flansches 56 festgelegt ist. In den Ventilblock 58 hinein ragt dann das Ventilgehäuse 60 mit den verschiedenen Durchlaßstellen zur Blendenbildung 32,36. Quer zu dieser Einbauanordnung erstreckt sich dann die Druckwaage 16 in Blickrichtung auf die Fig.5 gesehen im wesentlichen in horizontaler Lage zwischen den freien Endseiten des Ventilblockes 58 und insoweit bilden die Einschraubteile 80,82 den Gehäuseabschluß nach außen. Auf der dem Betrachter der Fig.5 zugewandten Seite des Ventilblockes 58 münden dann die wesentlichen Anschlußleitungen P, A₁ und A₂ aus. Andere Blockanordnungen sind möglich.

## Patentansprüche

1. Ventilvorrichtung für einen hydraulischen Kreis (10), die den zulaufenden Volumenstrom in mindestens zwei vorausbestimmte Teilströme zur Versorgung hydraulischer Verbraucher (V₁,V₂) des Kreises (10) teilt, die mindestens eine Druckwaage (16) aufweist sowie mindestens eine Blende, wobei die Blende als variable Blende (32) ausgestaltet ist, die mittels eines Proportional-Magneten (34) derart ansteuerbar ist, dass deren Öffnungsfläche sich verändert, **dadurch gekennzeichnet, dass** parallel zu der variablen Blende (32) eine weitere Blende (36) mit vorzugsweise konstanter Öffnungsfläche geschaltet ist.

2. Ventilvorrichtung nach Anspruch 1, **dadurch gekennzeichnet, dass** in einem dem Proportional-Magneten (34) zugeordneten Ventilgehäuse (60) mindestens eine erste Bohrungsreihe mit mindestens zwei in Verfahrrichtung eines Steuerkolbens (62), der mittels des Proportional-Magneten (34) innerhalb des Ventilgehäuses (60) verfahrbar ist, hintereinander angeordnete Durchlaßöffnungen (72,74) vorhanden sind.

3. Ventilvorrichtung nach Anspruch 2, **dadurch gekennzeichnet, dass** der Steuerkolben (62) zumindest eine freie Öffnungsfläche der im Ventilgehäuse (60) hintereinander angeordneten Durchlaßöffnungen (72,74) variiert.

4. Ventilvorrichtung nach Anspruch 2 oder 3, **dadurch gekennzeichnet, dass** die erste Bohrungsreihe (72,74) im Ventilgehäuse (60) an eine Druckversorgungsquelle (12) angeschlossen ist und dass die jeweils weitere Durchlaßöffnung (76) mit mindestens einem Fluideingang (E₁) der Druckwaage (16) fluidführend in Verbindung steht.

5. Ventilvorrichtung nach Anspruch 4, **dadurch gekennzeichnet, dass** an einer Abzweigstelle (X) des hydraulischen Kreises (10) ein Teilstrom des Fluidvolumenstroms dem Ventilgehäuse (60) des Proportional-Magneten (34) über die erste Bohrungsreihe (72,74) zugeführt ist und der zweite Teilstrom zumindest einem weiteren Fluideingang (E₂) der Druckwaage (16) zugeführt ist.

6. Ventilvorrichtung nach Anspruch 5, **dadurch gekennzeichnet, dass** an einer jeweils weiteren Abzweigstelle (84) im Nebenzweig ein Teil des Teilvolumenstromes auf der Eingangsseite (E₁, E₂) der Druckwaage (16) auf eine zugeordnete Kolbenendseite (88) des Druckwaagenkolbens (20) geführt ist.

7. Ventilvorrichtung nach Anspruch 6, **dadurch gekennzeichnet, dass** der Druckwaagenkolben (20) in jeder seiner Verfahrstellungen mittels am Druckwaagengehäuse (18) anliegender Kolbenringflächen (90) die Eingangsseiten (E₁, E₂) von den Kolbenendseiten (88) fluiddicht trennt und dass in mindestens einem Nebenzweig (86) eine Dämpfungsblende (92) geschaltet ist.

8. Ventilvorrichtung nach Anspruch 6, **dadurch gekennzeichnet, dass** der Druckwaagenkolben (20) in jeder seiner Verfahrstellungen mittels vom Druckwaagengehäuse (18) beabstandeter Kolbenringflächen (90) eine fluidführende Verbindung zwischen den Eingangsseiten (E₁, E₂) und diesen jeweils zuordenbaren Kolbenendseiten (88) herstellt.

9. Ventilvorrichtung nach einem der Ansprüche 1 bis 8, **dadurch gekennzeichnet, dass** zumindest die Druckwaage (16) sowie die jeweils eingesetzten Blenden (32,36) und der Proportional-Magnet (34) Bestandteil eines gemeinsamen Ventilblockes (58) sind.
